# EUROPEAN PATENT APPLICATION

(11) **EP 4 008 172 A1**
(43) Date of publication of application: **08.06.2022**
(21) Application number: 21167253.0
(22) Date of filing: 07.04.2021
(51) Int. Cl.: A01G 31/00, A01K 63/04

(54) **METHOD FOR CONTROLLING AN AQUAPONIC SYSTEM**

(30) Priority: 02.12.2020 IT 202000029561
(71) Applicant: Agri Island S.r.l., 00147 Roma RM (IT)
(72) Inventor: Ferrari, Giordano, 00147 Roma RM (IT); Lacquaniti, Pierpaolo, 00147 Roma RM (IT); Moresco, Andrea, 00147 Roma RM (IT)
(74) Representative: Perani & Partners S.p.A.

(57) **Abstract**

The present invention relates to a method for controlling an aquaponic system (1) provided with a plurality of tanks placed in fluid communication with each other by means of a plurality of pipes (4) for flowing an aqueous fluid between the tanks, wherein the plurality of tanks comprises at least a first tank (2) for breeding fish species and a second tank (3) for growing plant species; the method comprises the following steps: detecting, by means of a plurality of sensors (6) placed at the tanks and/or pipes (4), physical and/or chemical parameters of a volume of fluid; generating and sending by means of each sensor (6) a respective measurement signal (Sm) representative of the physical and/or chemical parameters of the volume of fluid; modifying the physical and/or chemical parameters of the volume of fluid, acting on the volume of fluid by means of a plurality of functional portions (5) located at the tanks and/or pipes (4); wherein the step of modifying the physical and/or chemical parameters of the volume of fluid comprises the steps of: receiving and processing by means of a control unit (7) each measurement signal (Sm) to generate at least one actuation signal (Sa) to actuate the respective functional portion (5); sending the actuation signal (Sa) to actuate the respective functional portion (5) to adjust the physical and/or chemical parameters.

## Description

### Technical field

The present invention relates to a method for controlling an aquaponic system.

The present invention finds use for breeding fish species and growing plant species according to aquaponic methodology.

### State of the background art

Aquaponic systems for breeding fish species and growing plant species are known in the state of the art.

Such systems comprise a first tank in which fish are bred and a second tank in which plants are grown. A third tank containing nitrifying bacteria is placed between the fish tank and the plant tank. The tanks are placed therebetween in fluid communication by means of pipes, so that a flow of water can be exchanged periodically between the fish tank and the plant tank, passing through the third tank of bacteria for water treatment. In particular, the water in which the fish are bred, which expel ammonia and release nutrients to the plants, is treated by means of the third tank and then transmitted to the plants. Specifically, the nitrifying bacteria contained in the third tank transform the ammonia present into nitrates, which benefit the plant growth. In turn the plants, with the growth thereof, assimilate the nitrates and other nutrients present, at the same time purifying the water itself which can return to the fish tanks clean.

To impart certain physical and/or chemical conditions inside the tanks, as well as to monitor the real conditions inside the tanks, the system comprises adjustment means and sensors, respectively. Thereby, the water in the tanks has the conditions suitable for the growth of the respective species contained.

### Problems of the background art

To manage the conditions inside the tanks, such systems require the periodic intervention of an operator, who must be highly trained and on-site to manage the system, and in particular the adjustment means, to be able to adjust the water parameters adequately.

### SUMMARY OF THE INVENTION

In this context, the technical task underlying the present invention is to propose a method for controlling an aquaponic system which overcomes the drawbacks of the above-mentioned prior art.

In particular, an object of the present invention is to provide a method for controlling an aquaponic system which allows the employment of untrained personnel, which requires less labour and at the same time allows to reduce consumption.

Said technical task and the objects stated are basically achieved by a method for controlling an aquaponic system comprising the technical features set out in one or more of the appended claims.

### Advantages of the invention

In particular, the method for controlling an aquaponic system according to the present invention solves the technical problem in that it involves actuating the adjustment means, by means of a control unit, according to that which is detected by the sensors, to independently adjust the physical and/or chemical parameters of the water.

By virtue of such a method, it is possible to manage the operation of the entire system in an automated manner, without the need for trained personnel to perform any operations to modify the parameters appropriately.

By virtue of such a method, it is also possible to optimize the operation of the system.

### Brief Description of the Figures

The features and advantages of the present invention will become apparent from the following detailed description of a possible practical embodiment thereof, illustrated by way of non-limiting example in the accompanying drawings, wherein:

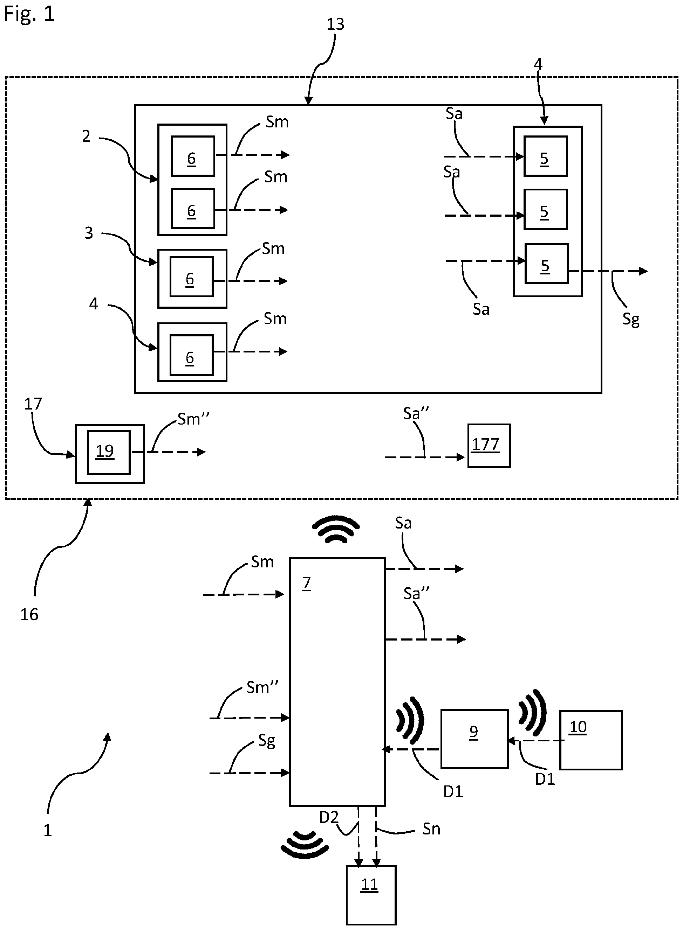

- Figure 1 schematically shows the operation of an aquaponic system in which to apply a method in accordance with the present invention;
- Figure 2 shows a diagram of a portion of an aquaponic system arranged to perform a method in accordance with the present invention.

### DETAILED DESCRIPTION OF THE INVENTION

With reference to the accompanying drawings, the present invention relates to a method for controlling an aquaponic system marked with the reference numeral 1.

The method according to the present invention applies to an aquaponic system 1 having a plurality of tanks placed in mutual fluid communication by means of a plurality of pipes 4 for flowing an aqueous fluid between the tanks.

In particular, the plurality of tanks comprises at least a first tank 2 for breeding fish species and a second tank 3 for growing plant species.

In accordance with a preferred embodiment, the plurality of tanks comprises a plurality of first tanks 2 for breeding fish species and a plurality of second tanks 3 for growing plant species. In other words, the aquaponic system 1 comprises two or more first tanks 2 for breeding fish and two or more second tanks 3 for growing plant species.

Preferably, the method according to the present invention includes that the aqueous fluid also flows to a third tank 12 in which nitrifying bacteria are present for the conversion of ammonia, released by the fish species, into nitrates.

The aqueous fluid is water or an aqueous-based nutrient solution. In the context of the present invention, water will be referred to as an aqueous fluid, without however losing generality.

Such a method aims to manage the tanks in order to independently establish the ideal conditions for the growth of the plant and fish species contained.

In further detail, the method comprises a first step of detecting, by means of a plurality of sensors 6 placed at said tanks and/or pipes 4, physical and/or chemical parameters of a volume of fluid.

Preferably, the chemical and/or physical parameters of the water to be monitored are the following: hydrostatic level, flow rate, temperature, pH, pressure, amount of dissolved oxygen, conductivity, oxidation reduction potential, but also amount of nutrients, presence of pathogens (parasites, moulds) and heavy metals, ammonia conversion rate.

Subsequent to the detection step, the method comprises a step of generating, by means of each sensor 6, and subsequently a step of sending, a respective measurement signal Sm representative of the physical and/or chemical parameters of the volume of fluid.

Subsequently, the method comprises a step in which such physical and/or chemical parameters of the volume of fluid are modified, in particular acting on the volume of fluid by means of a plurality of functional portions 5 placed at said tanks and/or pipes 4.

It should be noted that the step of modifying the physical and/or chemical parameters of the volume of fluid comprises a sub-step of receiving and processing, by means of a control unit 7 placed in signal communication with each sensor 6, each measurement signal Sm. The method then comprises a sub-step in which the control unit 7 generates at least one actuation signal Sa for actuating the respective functional portion 5. Such an actuation signal Sa is then sent by the control unit 7, also placed in signal communication with each functional portion 5, to a respective functional portion 5 to actuate it, so as to adjust the physical and/or chemical parameters.

In the continuation of the present disclosure, reference will be made to the set of the plurality of tanks, pipes 4, functional portions 5 and sensors 6 as a plant 13.

In other words, the method for controlling an aquaponic system 1 involves autonomously managing the plant 13 by means of a control unit 7.

The method includes setting the correct conditions for the growth of the fish and plant species in the first tank 2 and in the second tank 3 by acting on the functional portions 5 by means of the control unit 7.

Preferably, the step of detecting such physical and/or chemical parameters of the volume of fluid is carried out at the tanks 2 and 3 to monitor the ecosystem therewithin.

In more detail, the step of modifying the physical and/or chemical parameters of the volume of fluid is carried out by performing, by means of specific stations, a specific action on the fluid. Preferably, the method includes that each specific action is performed two or more times on the volume of fluid in circulation.

Preferably, the step of modifying the physical and/or chemical parameters of the volume of fluid is performed by acting on the volume of fluid at the pipes 4. In particular, the functional portions 5 act on the volume of fluid in a step before or after entry into one of the tanks. In other words, preferably, actions are carried out upon the fluid circulating in and/or out of the same tank, and not at a tank.

To act on the volume of fluid, the method comprises, for example, a sub-step of sanitizing and/or filtering the volume of fluid. Advantageously, it is possible to keep the water clean and remove any pathogens to protect the ecosystem. Such a sub-step is carried out by means of functional portions 5 comprising filtration stations 51 and/or sanitization stations 52 of the volume of fluid.

In more detail, the sub-step of filtering the volume of fluid is performed by means of bag and/or cartridge filters and/or sand filters. The bag and/or cartridge filters are preferably made of polypropylene. Still preferably, the sand filters are made of quartzite sand. The polypropylene filters can comprise activated carbon for the adsorption of any pollutants present or chlorine. The polypropylene filters comprise openings of twenty microns, or more preferably five microns. In each case, the size of the openings can be chosen according to the specific application.

The sub-step of sanitizing the volume of fluid is carried out by means of UV lamps and/or toroids placed inside a pipe. Thereby, the water is sterilized without the use of chemicals.

In particular, by means of the toroids, the method includes generating a magnetic field in the water for example by altering the absorption function of the liquids on cell membranes of any pathogens present and eliminating them. Alternatively or jointly, the sub-step of sanitizing the volume of fluid is performed by running the water through pipes in which UV lamps are placed, illuminating the water with UV radiation.

Preferably, the step of detecting the physical and/or chemical parameters of the volume of fluid comprises one or more of the sub-steps of:
- measuring the amount of dissolved oxygen, by means of a dissolved oxygen measuring probe D0;
- measuring the pH, by means of a pH meter PH;
- measuring the oxidation reduction potential, by means of a redoximeter;
- measuring the amount of nutrients,
- measuring the conductivity, by means of a conductivity meter C;
- measuring the pressure, by means of a pressure switch P;
- measuring the temperature, by means of a thermometer T;
- measuring the water level, preferably by means of floats LIV;
- measuring the flow velocity, by means of a flowmeter 27.

It should be noted that, in accordance, the method includes acting on the volume of fluid by means of the functional portions 5 comprising mechanical, electromechanical, thermal, hydraulic components such as pumps or filters, but also heat pumps, adapted to perform the specific actions. More in detail, the specific actions comprise one or more sub-steps of:
- providing oxygen, by means of a membrane compressor OX, in the form of low-pressure compressed air. In particular, such a sub-step includes that the oxygen dissolved in the water is maintained above 6 mg/l in each portion of the plant 13;
- adjusting the pH, preferably to a range between 6.7 and 7.2, depending on the species grown in the second tank 3;
- adjusting the oxidation reduction potential, possibly by controlling the dosage of disinfecting agents;
- adjusting the amount of nutrients,
- adjusting the conductivity, maintaining salinity below the value of 1,500 µS/cm;
- pumping water, also to control the operation of the filtering stations;
- heating and/or cooling, keeping the water temperature at 22 degrees ± 4 degrees. Such a sub-step is carried out for example by means of heat exchangers and/or heat pumps. The heat exchangers are for example plate heat exchangers.
- adjusting the level by topping it up appropriately; if below the threshold, acting on the pumps present;
- adjusting the flow rate, in particular by modulating between a flow slow enough to allow the species grown to absorb nutrients, but also fast enough to avoid stagnation.

Preferably, the method includes that each action is carried out two or more times inside the plant 13, through two or more of each specific station. Advantageously, if a single station is inactive for some reason, for example if a fault occurs, the other station can perform the function of the first on the volume of fluid without the system stopping.

In accordance with the present invention, the method preferably further comprises a step of collecting organic sediments in circulation with the aqueous fluid. Such a step is performed by two or more sedimentation tanks 8. In other words, the step of collecting organic sediments is aimed at accumulating waste and residues which fall into the water, e.g., dried leaves. In particular, such a step includes separating the organic sediments from the water by means of filters so that the sediments are retained inside the sedimentation tanks, and the water leaving them is cleaned again.

The method further comprises a step of defining a confined environment surrounding the plant 13 through barrier means 14.

In the remainder of the present disclosure, the set of the plant 13 and the barrier means 14 will be referred to as a greenhouse 16.

Preferably, the method comprises a step of lighting one or more tanks. Preferably, such a step is carried out by means of light sensors and adjustable lamps.

The lighting step comprises a sub-step of programming the light sensors according to the grown and/or bred species and a further sub-step of adjusting the lighting according to the natural light present, modulating the intensity of light emitted by the lamps.

Preferably, the method includes a sub-step of detecting, by means of the light sensors, a respective measurement signal and sending such a signal to the control unit 7. As a function of the measurement signal, the control unit 7 sends an actuation signal to the lamps so that the plants always receive the same amount of light or in any case a predetermined amount of light, for example variable at different times of the day.

Preferably, the method includes providing an adequate air exchange within the greenhouse 16. In this regard, the method comprises a step of forcing, by means of ventilation means, an air flow into/out of the greenhouse 16. For example, such a step of forcing an air flow is performed by an air extractor 177. The method also includes detecting, by means of a moisture sensor and/or temperature sensor 19 located inside the greenhouse 16, the moisture and air temperature present in the greenhouse 16.

Such a step of forcing an air flow can be carried out manually or, preferably, by means of the control unit 7. In accordance, the method comprises a sub-step of sending to the control unit 7, by means of such humidity and/or temperature sensors in signal communication with the control unit 7, a respective measurement signal Sm". As a function of the measurement signal Sm", the method includes sub-steps of processing the measurement signal Sm" and sending, by means of the control unit 7, an actuation signal Sa" to the ventilation means. In accordance with such a method, the air exchange can also be carried out automatically by the ventilation system 17 programmed to carry out a preset number of exchanges every hour. Preferably, the method includes to vent the greenhouse 16 by performing forty/sixty air exchanges per hour.

Preferably, the step of processing each measurement signal Sm to generate an actuation signal Sa comprises the sub-step of evaluating the measurement signals Sm as a function of first data D1 related to ideal physical and/or chemical parameters for growing and breeding various plant and fish species according to aquaponic methodology.

In other words, the first data D1 represent optimal growing and breeding conditions, according to aquaponic methodology, of a fish and plant species, and therefore vary according to the selected species.

In accordance with the present invention, the sub-step of evaluating the measurement signals Sm as a function of the first data D1 is preceded by a sub-step in which said first data D1 are saved in a memory unit 9 in signal communication with the control unit 7. Alternatively, the method includes that such first data D1 are acquired by an external network unit 10, in signal communication with the memory unit 9.

In other words, the aforementioned actuation signal Sa is generated, for each living species, in relation to standard values of conditions to be established inside the tanks. Such values are provided by the first data D1 to the control unit 7. Accordingly, the method includes a comparison sub-step, carried out by the control unit 7, between the measurement signal Sm provided by each sensor 6, which contains the value of the specific condition, for example relative to the temperature of the water in a tank, and the first data D1, to act on the functional portions 5. Such a comparison sub-step is followed by the correction of the growing and/or breeding conditions. In fact, by comparison, the control unit 7 sends the actuation signal Sa so that the affected parameter, if abnormal, is corrected by the relative functional portion 5.

According to a preferred embodiment, the method comprises a first step of monitoring, by means of the control unit 7, growth parameters of plant and fish species. Following such a step, the method comprises a step of producing second data D2 representative of said growth parameters. The method then includes processing the second data D2 to generate a technical report related to a growth and breeding cycle in progress in the tanks according to said second data D2. Advantageously, it is possible to study and optimize the growth and breeding of the species in progress and eventually reproduce them later under the same conditions.

For example, aspects which are to be monitored, reported by means of the second data D2, are species and number of plants present, species and animal mass present, visual appearance of the biological mass (plants and fish).

It should be noted that the method according to the present invention further includes a step of displaying the physical and/or chemical parameters and/or the second data D2 by means of a user interface 11 placed in signal communication with the control unit 7. For example, the user interface 11 takes the form of an App which can be downloaded to a mobile device, such as a smartphone or PC, or an internet page accessible by means of credentials.

In accordance with the present invention, the method also optionally includes the possibility of adjusting the physical and/or chemical parameters and/or by means of the user interface 11.

The method includes that the plant 13 operates in a continuous cycle. As a consequence, the control unit 7 maintains the chemical and/or physical parameters of the water over time and keeps the plant 13 active, excluding functional portions 5 if they are malfunctioning.

In this regard, the method according to the present invention preferably comprises a step of periodically querying, by means of the control unit 7, the various functional portions 5 to verify the status thereof. The method also comprises a subsequent step of reporting any anomalies by means of the user interface 11.

In more detail, the step of reporting any anomalies comprises a first sub-step of generating, by means of a functional portion 5 if not functioning, a fault signal Sg. Such a sub-step is followed by a second sub-step of transmitting the fault signal Sg to the control unit 7. Thus, the method includes a third sub-step in which the fault signal Sg is received by the control unit 7. A fourth sub-step, following the third, includes isolating, by means of the control unit 7, the respective functional portion 5. Thereafter, the method comprises a sub-step of generating and sending a warning signal Sn representative of the fault signal Sg to the user interface 11 to display said warning signal Sn by means of the user interface 11.

Preferably, the method comprises a further step of processing the fault signals Sg, by the control unit 7, and a step of generating an error report as a function of the fault signals Sg. It is preferable that such a step of generating error reports is followed by a step of displaying such error reports by means of the user interface 11.

Advantageously, the parameters of the plant 13 are adequately maintained and the operation of the aquaponic system 1 is preserved even in case of partial failure.

For this reason, preferably, the pipes 4 are arranged so as to obtain flow partitions and flow recirculations.

Furthermore, as mentioned above, preferably there are two or more of each specific station.

Advantageously, stoppages of the plant 13 can be avoided in the event of a single component malfunction.

Preferably, the method comprises a step of filming by means of a camera (not illustrated in the accompanying drawings) the inside of the greenhouse 16 so as to acquire images of the tanks. The method further includes sending by means of said camera, placed in signal communication with the user interface 11, the images of the tanks to the user interface so that a user can, by means of the user interface 11, remotely monitor the greenhouse 16 in real time.

Preferably, the method includes providing the aquaponic system 1 in a preassembled manner, in order to be able to be implemented independently by those who will use it.

The method preferably includes that, during installation, each tank is arranged to rest on an insulating panel 18, for example made of expanded polystyrene.

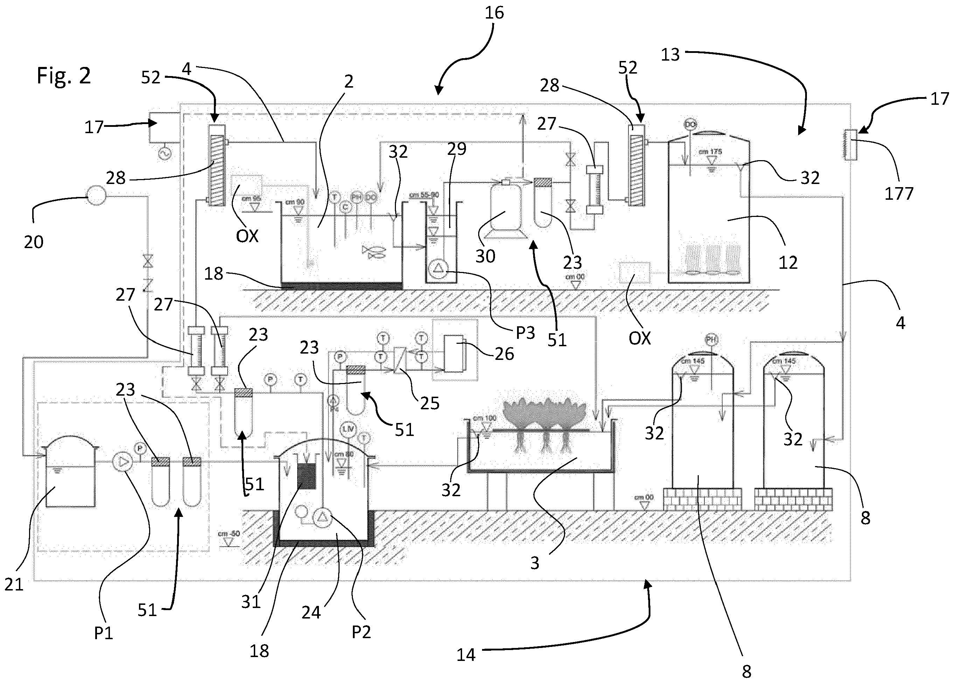

With particular reference to figure 2, an application of some steps of an embodiment of the method according to the present invention is described below.

The method includes a first step of transmitting water from a tanker 20, or from a local water mains, to a first reservoir 21. The method then comprises a step of performing a first disinfection in which the water is treated to be prepared for the operating cycle. Then, the method comprises pumping the fluid by means of a pump P1 into a filtration station 51, and filtering the water by means of polypropylene containers comprising polypropylene cartridge filters 23. The method then comprises a step of introducing the water into a second reservoir 24 from which the fluid itself is branched off into various roads. After said step of entering the second reservoir 24, the water is divided into two parts. The method includes pumping a first part thereof by means of a pump P4 to a filtration station 51, and heating it by means of a plate heat exchanger 25, connected to a heat pump 26, to then re-introduce it into the second reservoir 24. In particular, the water heating occurs by using an independent dual-circuit configuration, in which the plate heat exchanger 25 ensures that the water is free of possible contamination. The method includes pumping the second part of the water by means of a pump P2, coming from the second reservoir 24, to a filtration station 51 and therefore further branching off the flow. In accordance with the method of the present invention, a first flow branch is sent to a flowmeter 27, then passed through a UV lamp 28 for sterilization and is introduced into the first tank 2 for breeding fish species. Instead for the second branch, the method includes the introduction of plant species into the second growing tank 3 after passing through an additional flowmeter 27. The method then comprises a step of draining such a flow of water from the second tank 3 to the second reservoir 24 by means of a drain 32, so that the flow is re-sorted as described. From the first tank 2, on the other hand, the method involves draining the flow to a third tank 29 and then pumping it by means of a pump P3 in a quartz sand filter 30 to be filtered. At this point, the method includes sending part of the flow to a recirculation so that it returns to the second reservoir 24, passing through a polypropylene bag filter 31. Another part of the flow is instead transmitted to a polypropylene cartridge filter 23. The fluid is then partly reintroduced into the first tank 2 and partly transmitted to a flowmeter 27 and, passing through a UV lamp 28, reaches the third tank 12 in which the biological filtration is carried out by the bacteria. From here, the method comprises a step of transmitting, by means of a drain 32, the water divided into two parts in two respective sedimentation tanks 8, to carry out the organic sediment collection step. In particular, the sedimentation tanks 8 are connected to each other. From here, the method comprises a draining step to the second tank 3 and finally back to the second reservoir 24 to repeat the cycle.

Preferably, the method includes draining the water, by means of drains 32, at the free surface.

## Claims

1. Method for controlling an aquaponic system (1) provided with a plurality of tanks placed in mutual fluid communication by means of a plurality of pipes (4) for flowing an aqueous fluid between the tanks, the plurality of tanks comprising at least a first tank (2) for breeding fish species and a second tank (3) for growing plant species, the method comprising the following steps:
- detecting, by means of a plurality of sensors (6) placed at said tanks and/or pipes (4), physical and/or chemical parameters of a volume of fluid;
- generating and sending by means of each sensor (6) a respective measurement signal (Sm) representative of said physical and/or chemical parameters of the volume of fluid;
- modifying said physical and/or chemical parameters of the volume of fluid, acting on the volume of fluid by means of a plurality of functional portions (5) located at said tanks and/or pipes (4);
**characterized in that**
the step of modifying physical and/or chemical parameters of the volume of fluid comprises the sub-steps of:
- receiving and processing by means of a control unit (7) each measurement signal (Sm) to generate at least one actuation signal (Sa) for actuating the respective functional portion (5);
- sending said actuation signal (Sa) to actuate the respective functional portion (5) to adjust said physical and/or chemical parameters.

2. Method for controlling an aquaponic system (1) according to the preceding claim, wherein said step of modifying said physical and/or chemical parameters of the volume of fluid is performed by acting on the volume of fluid at said pipes (4).

3. Method for controlling an aquaponic system (1) according to any one of the preceding claims, wherein said step of modifying said physical and/or chemical parameters of the volume of fluid is performed by carrying out by means of specific stations a specific action on the fluid, each specific action being carried out two or more times on the volume of fluid in circulation.

4. Method for controlling an aquaponic system (1) according to any one of the preceding claims, wherein said step of modifying said physical and/or chemical parameters by acting on the volume of fluid comprises a sub-step of:
- sanitizing and/or filtering the volume of fluid.

5. Method for controlling an aquaponic system (1) according to claim 4, wherein said sub-step of filtering the volume of fluid is carried out by means of bag and/or cartridge polypropylene filters and/or by quartzite sand filters.

6. Method for controlling an aquaponic system (1) according to claim 4 or 5, wherein said sub-step of sanitizing the volume of fluid is carried out by means of UV lamps and/or toroids.

7. Method for controlling an aquaponic system (1) according to any one of the preceding claims, comprising a step of:
- collecting organic sediments in circulation with the aqueous fluid.

8. Method for controlling an aquaponic system (1) according to any one of the preceding claims, wherein said step of processing said measurement signals (Sm) to generate said actuation signal (Sa) comprises a sub-step of:
- evaluating said measurement signals (Sm) as a function of first data (D1) related to ideal physical and/or chemical parameters for growing and breeding various plant and fish species with aquaponic methods.

9. Method for controlling an aquaponic system (1) according to claim 8, wherein the sub-step of evaluating said measurement signals (Sm) as a function of first data (D1) is preceded by a sub-step of:
- saving the first data (D1) in the memory unit (9) or
- acquiring said first data (D1) by means of a network unit (10), in signal communication with the memory unit (9).

10. Method for controlling an aquaponic system (1) according to any one of the preceding claims, wherein the step of detecting the physical and/or chemical parameters of the volume of fluid comprises one or more of the sub-steps of:
- measuring the amount of dissolved oxygen,
- measuring the pH,
- measuring the oxidation reduction potential,
- measuring the amount of nutrients,
- measuring the conductivity;
- measuring the pressure,
- measuring the temperature,
- measuring the level,
- measure the flow velocity.

11. Method for controlling an aquaponic system (1) according to any one of the preceding claims, wherein said specific actions comprise one or more of: oxygenating, adjusting the pH, adjusting the oxidation potential, adjusting the amount of nutrients and conductivity, pumping, heating and/or cooling, adjusting the level, adjusting the flow velocity.

12. Method for controlling an aquaponic system (1) according to any one of the preceding claims, comprising the steps of:
- monitoring by means of said control unit (7) growth parameters of said plant and fish species and
- producing second data (D2) representative of said growth parameters,
- processing said second data (D2) to generate a technical report related to a growing and breeding cycle running in the tanks as a function of said second data (D2).

13. Method for controlling an aquaponic system (1) according to claim 11 or 12, comprising the steps of:
- displaying by means of a user interface (11) said physical and/or chemical parameters and/or said second data (D2);
- adjusting said physical and/or chemical parameters by means of the user interface (11).

14. Method for controlling an aquaponic system (1) according to the preceding claim, comprising the steps of:
- periodically querying, by means of the control unit (7), the various functional portions (5) to verify the state thereof,
- reporting any anomalies by means of the user interface (11).

15. Method for controlling an aquaponic system (1) according to the preceding claim, wherein the step of reporting any anomalies comprises the sub-steps of:
- generating, by means of a functional portion (5) if not functioning, a fault signal (Sg),
- transmitting said fault signal (Sg) to the control unit (7),
- receiving said fault signal (Sg) and isolating, by means of the control unit (7), the respective functional portion (5),
- generating and sending a warning signal (Sn) representative of the fault signal (Sg) to the user interface (11) and
- displaying said warning signal (Sn) by means of the user interface (11).
